# EUROPÄISCHE PATENTSCHRIFT

(11) **EP 1 357 477 B1**
(45) Veröffentlichungstag und Bekanntmachung des Hinweises auf die Patenterteilung: **12.03.2008**
(21) Anmeldenummer: 03007204.5
(22) Anmeldetag: 29.03.2003
(51) Int. Cl.: G06F 13/12

(54) **An einen Bus angeschlossene Einrichtung**
Device connected to a bus system
Dispositif connecté à un système de bus

(30) Priorität: 25.04.2002 DE 10218646
(43) Veröffentlichungstag der Anmeldung: 29.10.2003
(73) Patentinhaber: Infineon Technologies AG, 81669 München (DE)
(72) Erfinder: Barrenscheen, Jens, Dr., 81669 München (DE); Herz, Karl, 81735 München (DE); Vowe, Achim, Dr., 80469 München (DE)
(74) Vertreter: Repkow, Ines

(56) Entgegenhaltungen:
- EP-A- 0 442 615
- EP-A- 1 085 721
- US-A- 4 858 108
- US-A- 4 896 261

## Beschreibung

Die vorliegende Erfindung betrifft eine Vorrichtung gemäß dem Oberbegriff des Patentanspruchs 1, d.h. eine an einen Bus angeschlossene Einrichtung, die über den Bus Daten zu einer oder mehreren anderen Einrichtungen versenden kann und/oder Daten von anderen Einrichtungen empfangen kann,
- wobei die Einrichtung Speicher oder Speicherbereiche enthält, in welchen zu versendende oder empfangene Daten zwischengespeichert werden, und
- wobei die Einrichtung eine Steuereinrichtung enthält, die ermittelt,
   - ob Daten zu versenden sind und gegebenenfalls in welchem Speicher oder Speicherbereich die als nächste zu versendenden Daten gespeichert sind, und/oder
   - in welchen Speicher oder Speicherbereich die empfangenen Daten zu speichern sind.

Eine solche Einrichtung ist beispielsweise ein Knoten eines CAN. CAN steht für Controller Area Network, welches ein seit vielen Jahren bekanntes und weit verbreitetes Netzwerk zur Verbindung von dezentral angeordneten Einrichtungen ist; mit Knoten werden die über das CAN oder ein sonstiges Netzwerk oder Bussystem miteinander verbundenen Einrichtungen bezeichnet.

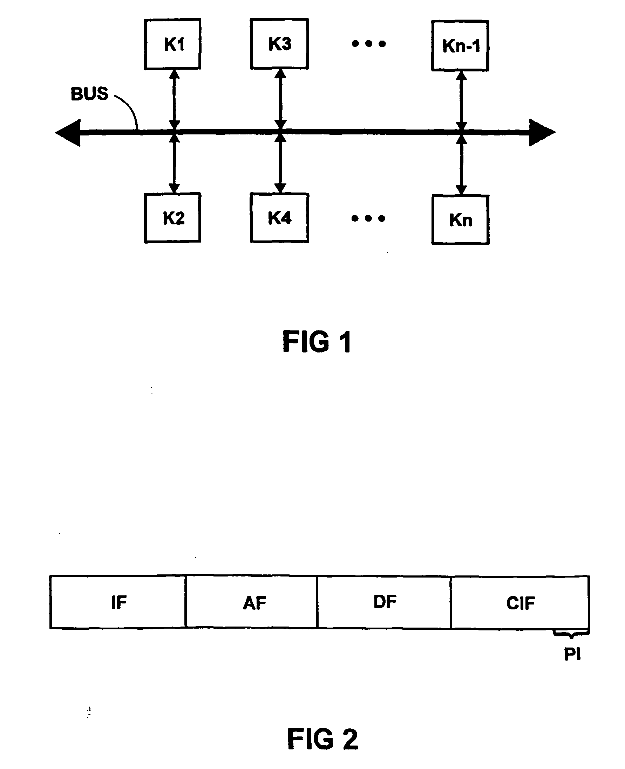

Der prinzipielle Aufbau eines CAN ist in Figur 1 veranschaulicht.

Die in der Figur 1 gezeigte Anordnung besteht aus einem Bus BUS und daran angeschlossenen Knoten K1 bis Kn.

Jeder Knoten kann über den Bus BUS Daten zu einem oder mehreren anderen Knoten versenden und/oder Daten von anderen Knoten empfangen. Die Übertragung der Daten erfolgt in Einheiten von sogenannten Messages.

Jede Message ist in eine bestimmte Anzahl von Feldern unterteilt, von welchen jedes eine bestimmte Anzahl von Bits umfaßt und eine bestimmte Information oder bestimmte Steuerdaten oder Steuersignale enthält; die Messages werden bitweise seriell über den Bus BUS übertragen.

Von den Feldern der Messages sind vorliegend insbesondere das sogenannte Identifier-Feld und das sogenannte Daten-Feld von Interesse.

Das Identifier-Feld umfaßt 11 Bits (Standard-CAN-Identifier) oder 29 Bits (beim CAN 2.0B Protokoll) und enthält Angaben über den Inhalt der empfangenen Daten, genauer gesagt Angaben über die durch die betreffende Message übertragene oder angeforderte Information.

Die im Identifier-Feld enthaltenen Daten können beispielsweise angeben, daß die betreffende Message die Öltemperatur betrifft, genauer gesagt, daß es sich bei den eigentlich zu übertragenden Daten um die Öltemperatur handelt, bzw. daß es sich bei der Information, welche der die Message ausgebende Knoten anfordert, um die Öltemperatur handelt.

Das Daten-Feld umfaßt 0 bis 64 Bits und enthält die eigentlich zu übertragenden Daten, also beispielsweise die Öltemperatur repräsentierende Daten.

Bezüglich des Inhalts und der Länge der weiteren Felder einer Message, sowie auf vorliegend und nachfolgend nicht erwähnten Besonderheiten eines CAN wird auf den ISO-Standard 11898 verwiesen.

Die an den Bus BUS angeschlossenen Knoten K1 bis Kn enthalten jeweils
- eine üblicherweise als CAN-Controller bezeichnete Steuereinrichtung, welche für das Ausgeben von zu übertragenden Daten auf den Bus BUS und/oder für das Empfangen von über den Bus BUS übertragenen Daten zuständig ist,
- eine Datenerzeugungseinrichtung, welche die zu versendenden Daten erzeugt und/oder eine Datenverarbeitungseinrichtung, welche die empfangenen Daten verarbeitet, und
- als Message Objects bezeichnete und durch mehr oder weniger große Speicher oder Speicherbereiche gebildete Schnittstellen zwischen dem CAN-Controller und der Datenerzeugungseinrichtung und/oder der Datenverarbeitungseinrichtung.

In den Message Objects werden die Daten zwischengespeichert, die von dem die Message Objects enthaltenden Knoten über den Bus BUS an einen oder mehrere andere Knoten zu übertragen sind, und die von einem anderen Knoten über den Bus BUS empfangen wurden.

Der Vollständigkeit halber sei darauf hingewiesen, daß es sich bei den zu versendenden oder empfangenen Daten, die in den Message Objects gespeichert werden, um die Daten des Identifier-Feldes und des Daten-Feldes der zu versendenden bzw. empfangenen Message handelt, wobei die Daten des Identifier-Feldes der Message in einem Identifier-Feld des Message Objects, und die Daten des Daten-Feldes der Message in einem Daten-Feld des Message Objects gespeichert sind bzw. werden.

Die Message Objects enthalten im betrachteten Beispiel jeweils das bereits erwähnte Identifier-Feld, ein Akzeptanzmasken-Feld, das ebenfalls bereits erwähnte Daten-Feld, und ein Steuerinformations-Feld.

Das Identifier-Feld enthält
- den Inhalt des Identifier-Feldes der zu versendenden Message (wenn in dem betreffenden Message Object zu versendende Daten gespeichert sind), oder
- den Identifier der empfangenen Message (wenn in dem betreffenden Message Object empfangene Daten gespeichert sind), oder
- den Identifier der Message, für welche das betreffende Message Object reserviert ist (wenn das betreffende Message Object zum Speichern von über den Bus empfangenen Daten reserviert ist, aber gerade unbenutzt ist).

Das Akzeptanzmasken-Feld enthält eine im folgenden als Akzeptanzmaske bezeichnete Maske, die bei der Auswahl des Message Objects verwendet wird, in welches über den Bus BUS empfangene Daten geschrieben werden können. Genauer gesagt wird durch die Akzeptanzmaske vorgegeben, welche Bits des im Identifier-Feld des Message Objects gespeicherten Identifiers mit den entsprechenden Bits des Identifiers der Message übereinstimmen müssen, damit das betreffende Message Object zur Speicherung der in der Message enthaltenen Daten verwendet werden kann. Vom Knoten über den Bus BUS empfangene Daten können nur in ein Message Object geschrieben werden, dessen Identifier, genauer gesagt dessen durch die Akzeptanzmaske festgelegte Identifier-Teil mit dem entsprechenden Identifier-Teil der die empfangenen Daten enthaltenden Message übereinstimmt. Ist kein solches Message Object vorhanden, werden die empfangenen Daten im betreffenden Knoten nicht gespeichert, also ignoriert; sind mehrere solche Message Objects vorhanden, wird unter diesen ein bestimmtes Message Object ausgewählt.

Das Daten-Feld enthält die eigentlich zu übertragenden Daten (den Inhalt des Daten-Feldes einer Message).

Im Steuerinformations-Feld sind diverse Steuerinformationen gespeichert, beispielsweise eine Information darüber, ob das Message Object zum Speichern von zu versendenden Daten, oder zum Speichern von empfangenen Daten reserviert ist, oder ob das Message Object frei (noch nicht beschrieben oder schon wieder ausgelesen) ist oder nicht.

Die von einem (ersten) Knoten über den Bus BUS an einen oder mehrere andere Knoten zu übertragenden Daten werden durch die Datenerzeugungseinrichtung des ersten Knotens erzeugt und in ein Message Object geschrieben. Der CAN-Controller liest diese Daten aus dem betreffenden Message Object aus, setzt diese Daten zusammen mit weiteren Daten zu einer Message zusammen, und gibt diese Message auf den Bus BUS aus. Die die Message empfangenden anderen Knoten, genauer gesagt die CAN-Controller derselben extrahieren aus der Message die von der Datenerzeugungseinrichtung des ersten Knotens erzeugten Daten, und schreiben diese - sofern ein entsprechendes Message Object vorhanden ist - in ein Message Object, aus welchem sie schließlich von der Datenverarbeitungseinrichtung des jeweiligen Knotens abgeholt und verarbeitet werden.

Der CAN-Controller durchsucht fortlaufend oder in gewissen (regelmäßigen oder unregelmäßigen) zeitlichen Abständen die Message Objects, um zu ermitteln, ob und gegebenenfalls welche Daten als nächste zu versenden sind. Dabei ermittelt er, in welchem Message Object die als nächste zu versendenden Daten gespeichert sind.

Bei der Ermittlung des Message Objects, in welchem die als nächste zu versendenden Daten gespeichert sind, wird bei den bekannten CAN-Controllern von einer der im folgenden beschriebenen Möglichkeiten Gebrauch gemacht.

Die erste Möglichkeit besteht darin, daß der CAN-Controller dasjenige Message Object als das gesuchte Message Object verwendet, welches das erste der durchsuchten Message Objects ist, in dem zu versendende Daten gefunden werden. Eine solche Ermittlung wird im folgenden als Ermittlung nach der Reihenfolge bezeichnet.

Die zweite Möglichkeit besteht darin, daß der CAN-Controller dasjenige Message Object als das gesuchte Message Object verwendet, welches von den Message Objects, in denen zu versendende Daten gespeichert sind, den Identifier aufweist, der die größten Chancen hat, die Arbitrierung zu gewinnen, die durchgeführt wird, wenn mehrere Knoten gleichzeitig eine Message auf den Bus ausgeben. Eine solche Ermittlung wird im folgenden als Ermittlung nach dem Identifier bezeichnet.

Nach der Ermittlung des gesuchten Message Objects liest der CAN-Controller die in diesem Message Object gespeicherten Daten, genauer gesagt die im Identifier-Feld und im Daten-Feld des Message Objects gespeicherten Daten aus, setzt diese Daten zusammen mit weiteren Daten zu einer Message zusammen, und gibt diese Message auf den Bus BUS aus.

Auf ähnliche Art und Weise wird vorgegangen, wenn der CAN-Controller festlegt, ob und gegebenenfalls in welches Message Object über den Bus BUS empfangene Daten zu schreiben sind. Auch hierbei werden die Message Objects in einer bestimmten Reihenfolge durchsucht. Dabei wird dasjenige Message Object als das gesuchte Message Object ausgewählt, welches das erste der durchsuchten Message Objects ist, in dessen Identifier-Feld ein Identifier gespeichert ist, der ganz oder teilweise mit dem Identifier der empfangenen Message übereinstimmt, wobei, wie vorstehend bereits erwähnt wurde, die Teile der Identifier, die übereinstimmen müssen, durch die im Akzeptanzmaskenfeld gespeicherte Akzeptanzmaske festgelegt sind.

Die Reihenfolge, in welcher die Message Objects durchsucht werden, wird durch eine im Knoten vorhandene Message-Object-Liste festgelegt.

Das Durchsuchen der Message Objects in der in der Message-Object-Liste festgelegten Reihenfolge weist den Vorteil auf, daß Einfluß auf die Auswahl des zu verwendenden Message Objects und auf den Ablauf der Auswahl genommen werden kann.

Die Reihenfolge, in welcher die Message Objects durchsucht werden, kann durch eine entsprechende Modifizierung der Message-Object-Liste verändert und somit an die jeweiligen Verhältnisse angepaßt werden. Allerdings können die Message Objects während der Modifizierung der Message-Object-Liste nicht durchsucht werden, so daß während dieser Zeit keine Messages versandt werden können und/oder empfangene Messages nicht gespeichert werden können. Dies kann ein sehr großes Sicherheitsrisiko darstellen, so daß Modifizierungen der Message-Object-Liste häufig nur zu ganz bestimmten Zeiten, beispielsweise während der Initialisierung des Systems, und insbesondere nicht oder nur in Ausnahmefällen während des Betriebes des Systems durchgeführt werden können.

Der vorliegenden Erfindung liegt daher die Aufgabe zugrunde, eine Möglichkeit zu finden, durch welche jederzeit, insbesondere auch während des Betriebes des Systems ohne eine Störung desselben Einfluß auf die Auswahl der Message Objects genommen werden kann, deren Daten versandt werden bzw. in welchen empfangene Daten gespeichert werden.

Diese Aufgabe wird erfindungsgemäß durch die in Patentanspruch 1 beanspruchte Einrichtung gelöst.

Die erfindungsgemäße Einrichtung zeichnet sich dadurch aus, daß in jedem Speicher oder Speicherbereich eine in den über den Bus übertragenen Daten nicht enthaltene Information gespeichert ist, durch welche dem jeweiligen Speicher oder Speicherbereich eine Prioritätsstufe zugeordnet wird, und daß die Steuereinrichtung unter Berücksichtigung dieser Information entscheidet, in welchem Speicher oder Speicherbereich die als nächste zu versendenden Daten gespeichert sind und/oder in welchen Speicher oder Speicherbereiche die empfangenen Daten zu speichern sind.

Da die Prioritäts-Information nur jeweils ein oder einige wenige Bits umfaßt, und da es zudem möglich ist, die Prioritäts-Information von nur einer einzelnen oder bestimmten mehreren Message Objects zu verändern, kann jederzeit, insbesondere auch während des normalen Betriebs des CAN, Einfluß auf die Auswahl des zu verwendenden Message Objects genommen werden.

Vorteilhafte Weiterbildungen der Erfindung sind den Unteransprüchen, der folgenden Beschreibung und den Figuren entnehmbar.

Die Erfindung wird nachfolgend anhand von Ausführungsbeispielen unter Bezugnahme auf die Figuren näher erläutert. Es zeigen
- Figur 1: den Aufbau eines die beschriebene Einrichtung enthaltenden Systems, und
- Figur 2: ein Message Object der im folgenden näher beschriebenen Einrichtung.

Die im folgenden beschriebene Einrichtung ist ein CAN-Knoten.

Es sei jedoch bereits an dieser Stelle darauf hingewiesen, daß hierauf keine Einschränkung besteht. Die Besonderheiten der im folgenden beschriebenen Einrichtung können auch in beliebigen anderen Einrichtungen zum Einsatz kommen, die Bestandteil eines Bussystems oder Netzwerkes sind, und bei welchen die Auswahl der zu versendenden Daten und/oder die Auswahl des Speichers oder Speicherbereichs, in welchen empfangene Daten gespeichert werden, wie bei einem CAN-Knoten oder auf ähnliche Art und Weise erfolgt.

Der beschriebene CAN-Knoten ist einer der Knoten K1 bis Kn der in der Figur 1 gezeigten Anordnung.

Er weist jedoch gegenüber herkömmlichen CAN-Knoten einige Besonderheiten auf. Insbesondere unterscheiden sich die Message Objects und die vorliegend als CAN-Controller bezeichneten Steuereinrichtung, die entscheidet, welche Daten, genauer gesagt die Daten welches Message Objects auf den Bus BUS ausgegeben werden, und/oder in welchem Message Object über den Bus BUS empfangene Daten geschrieben werden.

Gegenüber den Message Objects eines herkömmlichen CAN-Knotens weisen die Message Objects des im folgenden beschriebenen CAN-Knoten ein oder mehrere zusätzliche Bits auf, durch welchen den Message Objects unabhängig voneinander eine bestimmte Prioritätsstufe zugewiesen werden kann. Diese, im folgenden als Prioritäts-Information bezeichneten zusätzlichen Bits können durch eine beliebige Komponente des CAN-Knotens in die Message Objects geschrieben werden; wann welche Prioritäts-Information in ein Message Object geschrieben wird, kann vom CAN-Knoten selbst bestimmt werden, und/oder dem betreffenden CAN-Knoten von einem anderen CAN-Knoten vorgegeben werden. Es sei bereits an dieser Stelle erwähnt, daß das Einschreiben der Prioritäts-Information in ein Message Object in einer vernachlässigbar kurzen Zeit erfolgen kann, so daß es ohne Störung des Betriebes des CAN-Knotens möglich ist, die Prioritäts-Information von einzelnen, mehreren, oder allen Message Objects zu verändern.

Ein eine solche Prioritäts-Information enthaltendes Message Object ist in Figur 2 veranschaulicht.

Das in der Figur 2 gezeigte Message Object enthält ein Identifier-Feld IF, ein Akzeptanzmasken-Feld AF, ein Daten-Feld DF, und ein Steuerinformations-Feld CIF.

Das Identifier-Feld IF, das Akzeptanzmasken-Feld AF, und das Daten-Feld DF entsprechen vollständig des so bezeichneten Feldern des eingangs beschriebenen Message Objects.

Das Steuerinformations-Feld CIF des in der Figur 2 gezeigten Message Objects und das Steuerinformations-Feld des eingangs beschriebenen herkömmlichen Message Objects unterscheiden sich jedoch voneinander. Das Steuerinformations-Feld CIF des in der Figur 2 gezeigten Message Objects enthält eine ein oder mehrere Bits umfassende Prioritäts-Information PI, welche Steuerinformations-Feld des eingangs beschriebenen herkömmlichen Message Objects nicht enthalten ist; im übrigen entsprechen das Steuerinformations-Feld CIF des in der Figur 2 gezeigten Message Objects und das Steuerinformations-Feld des eingangs beschriebenen herkömmlichen Message Objects einander.

Im betrachteten Beispiel umfaßt die Prioritäts-Information jeweils zwei Bits. Dadurch kann den Message Objects jeweils eine von vier Prioritätsstufen zugewiesen werden.

Im betrachteten Beispiel repräsentiert eine Prioritäts-Information "11" die höchste Prioritätsstufe, eine Prioritäts-Information "10" die zweithöchste Prioritätsstufe, eine Prioritäts-Information "01" die dritthöchste Prioritätsstufe, und eine Prioritäts-Information "00" die niedrigste Prioritätsstufe.

Die Prioritäts-Information kann jedoch auch beliebig viel mehr oder weniger Bits umfassen. Darüber hinaus kann selbstverständlich auch eine beliebige andere Zuordnung von Prioritäts-Information und Prioritätsstufen gewählt werden.

Wenn der CAN-Controller nach dem Message Object sucht, welches die als nächste zu versendenden Daten enthält, und/oder welches er zum Speichern von empfangenen Daten zu verwenden hat, durchsucht er die Message Objects nach wie vor in einer durch eine Message-Object-Liste vorgegebenen Reihenfolge. Allerdings erfolgt die Entscheidung, welche Daten, genauer gesagt die Daten welches Message Objects über den Bus BUS zu versenden sind, und/oder in welchem Message Object über den Bus BUS empfangene Daten zu speichern sind, unter zusätzlicher Berücksichtigung der in den Message Objects enthaltenen Prioritäts-Information.

Die Berücksichtigung der Prioritäts-Information erfolgt derart, daß das zu verwendende Message Object unter den Message Objects ausgewählt wird, welchen durch die Prioritäts-Information die höchste Prioritätsstufe zugeordnet ist. Zur Vermeidung von Mißverständnissen sei darauf hingewiesen, daß unter höchste Prioritätsstufe nicht die größtmögliche Prioritätsstufe, sondern die höchste Prioritätsstufe zu verstehen ist, die einem oder mehreren der vorhandenen Message Objects durch die darin gespeicherte Prioritäts-Information zugewiesen ist. D.h.,
(1) wenn sich unter den vorhandenen Message Objects nur Message Objects befinden, in welchen die Prioritäts-Information 00 gespeichert ist, wird das zu verwendende Message Object unter allen Message Objects ausgewählt,
(2) wenn sich unter den vorhandenen Message Objects Message Objects befinden, in welchen die Prioritäts-Information 01 gespeichert ist, und sich unter den vorhandenen Message Objects keine Message Objects befinden, in welchen die Prioritäts-Information 10 und/oder 11 gespeichert ist, wird das zu verwendende Message Object unter den Message Objects ausgewählt, in welchen die Prioritäts-Information 01 gespeichert ist,
(3) wenn sich unter den vorhandenen Message Objects Message Objects befinden, in welchen die Prioritäts-Information 10 gespeichert ist, und sich unter den vorhandenen Message Objects keine Message Objects befinden, in welchen die Prioritäts-Information 11 gespeichert ist, wird das zu verwendende Message Object unter den Message Objects ausgewählt, in welchen die Prioritäts-Information 10 gespeichert ist, und
(4) wenn sich unter den vorhandenen Message Objects Message Objects befinden, in welchen die Prioritäts-Information 11 gespeichert ist, wird das zu verwendende Message Object unter den Message Objects ausgewählt, in welchen die Prioritäts-Information 11 gespeichert ist.

Obgleich dies nicht der Fall sein muß, erfolgt die Auswahl des zu verwendenden Message Objects aus den zu berücksichtigenden Message Objects in den genannten Fällen (1) bis (4) zumindest teilweise unterschiedlich: jeder Prioritätsstufe ist eine Vorschrift zugewiesen, nach welcher unter den Message Objects, welchen die betreffende Prioritätsstufe zugewiesen ist, das zu verwendende Message Object auszuwählen ist. Diese Vorschrift kann für die Ermittlung des Message Objects, dessen Inhalt zu versenden ist, und für die Ermittlung des Message Objects, im welchem empfangene Daten zu speichern sind, unterschiedlich sein.

Bei der Auswahl des Message Objects, dessen Inhalt als nächster zu versenden ist, wird im betrachteten Beispiel so vorgegangen,
- daß im vorstehend genannten Fall (1), also wenn das zu verwendende Message Object unter den Message Objects auszuwählen ist, in welchen die Prioritäts-Information 00 gespeichert ist, eine Ermittlung nach der Reihenfolge durchgeführt wird,
- daß im vorstehend genannten Fall (2), also wenn das zu verwendende Message Object unter den Message Objects auszuwählen ist, in welchen die Prioritäts-Information 01 gespeichert ist, eine Ermittlung nach dem Identifier durchgeführt wird,
- daß im vorstehend genannten Fall (3), also wenn das zu verwendende Message Object unter den Message Objects auszuwählen ist, in welchen die Prioritäts-Information 10 gespeichert ist, eine Ermittlung nach der Reihenfolge durchgeführt wird, und
- daß im vorstehend genannten Fall (4), also wenn das zu verwendende Message Object unter den Message Objects auszuwählen ist, in welchen die Prioritäts-Information 11 gespeichert ist, eine Ermittlung in Abhängigkeit von der aktuellen Zeit durchgeführt wird, wie es beispielsweise beim Time Triggered CAN bzw. TTCAN gemäß ISO 11898-4 zu erfolgen hat.

Demnach ist es im betrachteten Beispiel so,
- daß der CAN-Controller im vorstehend genannten Fall (1) die Daten versendet, die in demjenigen Message Object gespeichert sind, welches das erste der durchsuchten Message Objects ist, das zu versendende Daten und die Prioritäts-Information 00 enthält,
- daß der CAN-Controller im vorstehend genannten Fall (2) die Daten versendet, die in demjenigen Message Object gespeichert sind, welches unter den Message Objects, die zu versendende Daten und die Prioritäts-Information 01 enthalten, dasjenige Message Object ist, dessen Identifier die größten Chancen hat, die Arbitrierung zu gewinnen, die durchgeführt wird, wenn mehrere Knoten gleichzeitig eine Message auf den Bus ausgeben,
- daß der CAN-Controller im vorstehend genannten Fall (3) die Daten versendet, die in demjenigen Message Object gespeichert sind, welches das erste der durchsuchten Message Objects ist, das zu versendende Daten und die Prioritäts-Information 10 enthält, und
- daß der CAN-Controller im vorstehend genannten Fall (4) die Daten versendet, die in demjenigen Message Object gespeichert sind, welches unter den Message Objects, die zu versendende Daten und die Prioritäts-Information 11 enthalten, dasjenige Message Object ist, dessen Inhalt gemäß einer im Knoten existierende Festlegung zum betreffenden Zeitpunkt versendet werden muß.

Darüber hinaus kann es sich bei der Ermittlung des Message Objects, dessen Inhalt zu versenden ist, als vorteilhaft erweisen, wenn beim Vorliegen bestimmter Bedingungen Message Objects mit einer bestimmten Prioritäts-Information unberücksichtigt bleiben. Dies wird im betrachteten Beispiel praktiziert. Genauer gesagt bleiben im betrachteten Beispiel Message Objects mit der Prioritäts-Information 11 unberücksichtigt, wenn der Knoten für den Einsatz in einem TTCAN ausgelegt ist, aber in einem "normalen" CAN eingesetzt wird, oder wenn der Knoten in einem TTCAN eingesetzt wird und sich das System gerade in einem im folgenden als arbitration window bezeichneten Zeitfenster befindet, innerhalb dessen wie beim normalen CAN jeder Knoten zu jeder Zeit beliebige Daten auf den Bus ausgeben kann. Andererseits bleiben Message Objects mit der Prioritäts-Information 00, 01 und 10 unberücksichtigt, wenn der Knoten in einem TTCAN eingesetzt wird, und sich das System gerade in einem sogenannten im folgenden als exclusive window bezeichneten Zeitfenster befindet, innerhalb dessen eine bestimmte Messages versandt werden muß bzw. nur eine ganz bestimmte Message versandt werden darf.

Bei der Ermittlung des Message Objects, in welches empfangene Daten zu schreiben sind, wird im betrachteten Beispiel so vorgegangen, daß der CAN-Controller die empfangenen Daten in demjenigen Message Object speichert, welches von den durchsuchten Message Objects das erste Message Object ist,
- das zum Speichern von empfangenen Daten reserviert ist, und
- das noch nicht beschrieben oder aber schon wieder ausgelesen wurde, und
- dessen Identifier, genauer gesagt dessen durch die Akzeptanzmaske vorgegebene Teil des Identifiers, mit dem entsprechenden Teil des Identifiers der empfangenen Message übereinstimmt, und
- welchem unter diesen Message Objects die höchste Prioritätsstufe zugewiesen ist.

Auch hierbei kann es sich als vorteilhaft erweisen, wenn beim Vorliegen bestimmter Bedingungen Message Objects mit einer bestimmten Prioritäts-Information unberücksichtigt bleiben. Auch dies wird im betrachteten Beispiel praktiziert. Genauer gesagt bleiben im betrachteten Beispiel Message Objects mit der Prioritäts-Information 11 unberücksichtigt, wenn der Knoten für den Einsatz in einem TTCAN ausgelegt ist, aber in einem "normalen" CAN eingesetzt wird, oder wenn der Knoten in einem TTCAN eingesetzt wird und sich das System gerade in einem arbitration window befindet. Andererseits bleiben Message Objects mit der Prioritäts-Information 00, 01 und 10 unberücksichtigt, wenn der Knoten in einem TTCAN eingesetzt wird, und sich das System gerade in einem exclusive window befindet.

Die vorstehend bereits mehrfach erwähnte Message-Object-Liste, durch welche vorgegeben wird, in welcher Reihenfolge die Message Objects zu durchsuchen sind, wenn das Message Object zu ermitteln ist, in welchem die als nächste zu versendenden Daten gespeichert sind, und/oder wenn das Message Object zu ermitteln ist, in welches empfangene Daten zu speichern sind, enthält sowohl die Message Objects, die zum Zwischenspeichern von zu versendenden Daten vorgesehen sind, als auch die Message Objects, die zum Zwischenspeichern von empfangenen Daten vorgesehen sind. D.h., es existiert nur eine einzige Message-Object-Liste, die vom CAN-Controller sowohl dann, wenn er nach zu versendenden Daten sucht, als auch dann, wenn er einen Speicherplatz für empfangene Daten sucht, vollständig der Reihe nach durchsucht wird. Der Vollständigkeit halber sei darauf hingewiesen, daß in der Message-Object-Liste die Pointer zu den jeweiligen Message Objects gespeichert sind. Es sei ferner darauf hingewiesen, daß keine zwingende Notwendigkeit besteht, eine Message-Object-Liste vorzusehen. Anstatt einer Message-Object-Liste kann beispielsweise vorgesehen werden, daß in den Message Objects zusätzlich ein Pointer-Feld vorgesehen wird, in welchem ein Pointer gespeichert ist, der auf das in der Message-Object-Reihenfolge nach ihm stehende Message Object zeigt, und/oder ein Pointer gespeichert ist, der auf das in der Message-Object-Reihenfolge vor ihm stehende Message Object zeigt; in diesem Fall könnte auf das Vorsehen einer Message-Object-Liste verzichtet werden.

Im betrachteten Beispiel arbeitet der CAN-Controller so, daß er dann, wenn er ein Message Object sucht, in welches er empfangene Daten schreiben kann, beim Durchsuchen der vorhandenen Message Objects gleichzeitig auch ermittelt, in welchem Message Object die als nächste zu versendenden Daten gespeichert sind. Hierauf besteht jedoch keine Einschränkung. Der CAN-Controller kann beim Durchsuchen der vorhandenen Message Objects selbstverständlich auch nur ermitteln, in welchem Message Object die als nächste zu versendenden Daten gespeichert sind, oder nur ermitteln in welches Message Object empfangene Daten zu schreiben sind.

Darüber hinaus ist es im betrachteten Beispiel so, daß der CAN-Controller bereits während des Durchsuchens der vorhandenen Message Objects das Message Objects ermittelt, in welchem die als nächste zu versendenden Daten gespeichert sind, und/oder in welches Message Object empfangene Daten zu schreiben sind. D.h. der CAN-Controller wählt bereits beim Durchsuchen der vorhandenen Message Objects aus, welches der Message Objects mit der höchsten Prioritäts-Information zu verwenden ist; das Ermitteln der Message Objects mit der höchsten Prioritäts-Information und die Auswahl des zu verwendenden Message Objects unter diesen Message Objects erfolgt in einem einzigen Arbeitsgang.

Im folgenden wird anhand eines Beispiels beschrieben, wie das Durchsuchen der Message Objects abläuft. Es sei angenommen, daß 14 Message Objects MO1 bis MO14 vorhanden sind, die in der Reihenfolge MO1, MO2, MO3, MO4, MO5, MO6, MO7, MO8, MO9, MO10, MO11, MO12, MO13, MO14 durchsucht werden. Es sei ferner angenommen,
- daß das Message Object MO1
   - ein zum Speichern von zu versendenden Daten reserviertes Message Object ist,
   - zu versendende (noch nicht versandte) Daten enthält, und
   - die Prioritäts-Information 00 enthält,
- daß das Message Object M02
   - ein zum Speichern von zu versendenden Daten reserviertes Message Object ist,
   - zu versendende (noch nicht versandte) Daten enthält, und
   - die Prioritäts-Information 00 enthält,
- daß das Message Object M03
   - ein zum Speichern von zu versendenden Daten reserviertes Message Object ist,
   - keine zu versendenden Daten enthält, und
   - die Prioritäts-Information 10 enthält,
- daß das Message Object MO4
   - ein zum Speichern von zu versendenden Daten reserviertes Message Object ist,
   - zu versendende (noch nicht versandte) Daten enthält, und
   - die Prioritäts-Information 01 enthält,
- daß das Message Object MO5
   - ein zum Speichern von zu versendenden Daten reserviertes Message Object ist,
   - zu versendende (noch nicht versandte) Daten enthält, und
   - die Prioritäts-Information 11 enthält,
- daß das Message Object M06
   - ein zum Speichern von zu versendenden Daten reserviertes Message Object ist,
   - zu versendende (noch nicht versandte) Daten enthält, und
   - die Prioritäts-Information 01 enthält,
- daß das Message Object MO7
   - ein zum Speichern von zu versendenden Daten reserviertes Message Object ist,
   - zu versendende (noch nicht versandte) Daten enthält, und
   - die Prioritäts-information 10 enthält,
- daß das Message Object M08
   - ein zum Speichern von zu versendenden Daten reserviertes Message Object ist,
   - zu versendende (noch nicht versandte) Daten enthält, und
   - die Prioritäts-Information 10 enthält,
- daß das Message Object MO9
   - ein zum Speichern von empfangenen Daten reserviertes Message Object ist,
   - keine noch nicht verarbeiteten Daten enthält, und
   - die Prioritäts-Information 00 enthält,
- daß das Message Object MO10
   - ein zum Speichern von empfangenen Daten reserviertes Message Object ist,
   - keine noch nicht verarbeiteten Daten enthält, und
   - die Prioritäts-Information 00 enthält,
- daß das Message Object MO11
   - ein zum Speichern von empfangenen Daten reserviertes Message Object ist,
   - keine noch nicht verarbeiteten Daten enthält, und
   - die Prioritäts-Information 00 enthält,
- daß das Message Object MO12
   - ein zum Speichern von empfangenen Daten reserviertes Message Object ist,
   - keine noch nicht verarbeiteten Daten enthält, und
   - die Prioritäts-Information 10 enthält,
- daß das Message Object MO13
   - ein zum Speichern von empfangenen Daten reserviertes Message Object ist,
   - keine noch nicht verarbeiteten Daten enthält, und
   - die Prioritäts-Information 11 enthält,
- daß das Message Object MO14
   - ein zum Speichern von empfangenen Daten reserviertes Message Object ist,
   - keine noch nicht verarbeiteten Daten enthält, und
   - die Prioritäts-Information 01 enthält,

Darüber hinaus sei angenommen, daß der betreffende Knoten Bestandteil eines TTCAN sei, das sich gerade im arbitration window befindet.

Bei der Überprüfung des Message Objects MO1 registriert der CAN-Controller, daß dieses Message Object die Prioritäts-Information 00 enthält, und daß dieses Message Object beim aktuellen Stand der Dinge das Message Object ist, in welchem die als nächste zu versendenden Daten gespeichert sind.

Bei der Überprüfung des nächsten Message Objects MO2 stellt der CAN-Controller fest, daß dieses Message Object nicht das Message Object sein kann, in welchem die als nächste zu versendenden Daten gespeichert sind, weil es wie das Message Object MO1 die Prioritäts-Information 00 enthält, und weil unter den Message Objects mit der Prioritäts-Information 00 eine Ermittlung nach der Reihenfolge erfolgt. Der CAN-Controller registriert folglich auch weiterhin, daß das Message Object MO1 beim aktuellen Stand der Dinge das Message Object ist, in welchem die als nächste zu versendenden Daten gespeichert sind.

Bei der Überprüfung des nächsten Message Objects MO3 stellt der CAN-Controller fest, daß dieses Message Object nicht das Message Object sein kann, in welchem die als nächste zu versendenden Daten gespeichert sind, weil dieses Message Object keine zu versendenden Daten enthält. Der CAN-Controller registriert folglich auch weiterhin, daß das Message Object MO1 beim aktuellen Stand der Dinge das Message Object ist, in welchem die als nächste zu versendenden Daten gespeichert sind.

Bei der Überprüfung des nächsten Message Objects MO4 stellt der CAN-Controller fest, daß die Prioritäts-Information dieses Message Objects eine höhere Prioritätsstufe repräsentiert als die Prioritäts-Information des Message Objects, welches bisher als das Message Object angesehen wurde, in welchem die als nächste zu versendenden Daten gespeichert sind. Der CAN-Controller registriert folglich, daß das Message Object MO4 beim aktuellen Stand der Dinge das Message Object ist, in welchem die als nächste zu versendenden Daten gespeichert sind.

Bei der Überprüfung des nächsten Message Objects MO5 stellt der CAN-Controller fest, daß dieses Message Object nicht das Message Object sein kann, in welchem die als nächste zu versendenden Daten gespeichert sind. Zwar ist diesem Message Object eine höhere Prioritätsstufe zugeordnet als dem Message Object MO4, doch sind Message Objects, welchen diese Prioritätsstufe zugeordnet ist, nicht zu berücksichtigen, weil sich das System gerade in einem arbitration window befindet. Der CAN-Controller registriert folglich auch weiterhin, daß das Message Object MO4 beim aktuellen Stand der Dinge das Message Object ist, in welchem die als nächste zu versendenden Daten gespeichert sind. Wenn sich das System gerade in einem exclusive window befinden würde, würden nur die Message Objects berücksichtigt werden, die die Prioritäts-Information 11 enthalten, und es würde unter diesen Message Objects dasjenige Message Object als das Message Object registriert, welches die Daten enthält, die zum betreffenden Zeitpunkt versendet werden müßte. Dies kann beispielsweise unter Zuhilfenahme einer Tabelle ermittelt werden, in welcher gespeichert ist, wann welche Message Objects wofür zu verwenden sind.

Bei der Überprüfung des nächsten Message Objects MO6 stellt der CAN-Controller fest, daß dieses Message Object die gleiche Prioritäts-Information enthält wie das Message Object MO4, welches der CAN-Controller derzeit als das Message Object registriert hat, in welchem die als nächste zu versendenden Daten gespeichert sind. Der CAN-Controller muß daher überprüfen, ob der im Identifier-Feld des Message Objects MO4 gespeicherte Identifier oder der im Identifier-Feld des Message Objects MO6 gespeicherte Identifier die besseren Chancen hat, die Arbitrierung zu gewinnen, die durchgeführt wird, wenn mehrere Knoten gleichzeitig eine Message auf den Bus BUS ausgeben. Es sei angenommen, daß dies der im Message Object MO6 gespeicherte Identifier ist. Der CAN-Controller registriert folglich, daß das Message Object MO6 beim aktuellen Stand der Dinge das Message Object ist, in welchem die als nächste zu versendenden Daten gespeichert sind; anderenfalls würde der CAN-Controller auch weiterhin registrieren, daß das Message Object MO4 beim aktuellen Stand der Dinge das Message Object ist, in welchem die als nächste zu versendenden Daten gespeichert sind.

Bei der Überprüfung des nächsten Message Objects MO7 stellt der CAN-Controller fest, daß die Prioritäts-Information dieses Message Objects eine höhere Prioritätsstufe repräsentiert als die Prioritäts-Information des Message Objects MO6, welches bisher als das Message Object angesehen wurde, in welchem die als nächste zu versendenden Daten gespeichert sind. Der CAN-Controller registriert folglich, daß das Message Object MO7 beim aktuellen Stand der Dinge das Message Object ist, in welchem die als nächste zu versendenden Daten gespeichert sind.

Bei der Überprüfung des nächsten Message Objects MO8 stellt der CAN-Controller fest, daß dieses Message Object nicht das Message Object sein kann, in welchem die als nächste zu versendenden Daten gespeichert sind, weil es wie das Message Object MO7 die Prioritäts-Information 10 enthält, und weil unter den Message Objects mit der Prioritäts-Information 10 eine Ermittlung nach der Reihenfolge erfolgt. Der CAN-Controller registriert folglich auch weiterhin, daß das Message Object MO7 beim aktuellen Stand der Dinge das Message Object ist, in welchem die als nächste zu versendenden Daten gespeichert sind.

Bei der Überprüfung des nächsten Message Objects MO9, welches - wie auch alle weiteren Message Objects des betrachteten Beispiels - ein Message Object zum Speichern von empfangenen Daten ist, überprüft der CAN-Controller ob der im Message Object gespeicherte Identifier, genauer gesagt der durch die Akzeptanzmaske vorgegebenen Teil desselben mit dem entsprechenden Teil des Identifiers der empfangenen Message übereinstimmt. Es sei angenommen, daß diesbezüglich beim Message Object MO9 keine Übereinstimmung besteht, so daß das Message Object für die Speicherung der empfangenen Daten nicht in Frage kommt.

Bei der Überprüfung des nächsten Message Objects MO10 möge der CAN-Controller feststellen, daß der im Message Object gespeicherte Identifier, genauer gesagt der durch die Akzeptanzmaske vorgegebenen Teil desselben mit dem entsprechenden Teil des Identifiers der empfangenen Message übereinstimmt.

Der CAN-Controller registriert daher, daß das Message Object MO10 beim aktuellen Stand der Dinge das Message Object ist, in welchem die empfangenen Daten zu speichern sind.

Bei der Überprüfung des nächsten Message Objects MO11 stellt der CAN-Controller fest, daß dieses Message Object nicht das Message Object sein kann, in welchem die empfangenen Daten zu speichern sind, weil die darin enthaltene Prioritäts-Information keine höhere Prioritätsstufe repräsentiert als die Prioritäts-Information des Message Objects M10, welches derzeit als das Message Object registriert ist, in welchem die empfangenen Daten zu speichern sind. Der CAN-Controller registriert daher auch weiterhin, daß das Message Object MO10 beim aktuellen Stand der Dinge das Message Object ist, in welchem die empfangenen Daten zu speichern sind.

Bei der Überprüfung des nächsten Message Objects MO12 möge der CAN-Controller feststellen, daß der im Message Object gespeicherte Identifier, genauer gesagt der durch die Akzeptanzmaske vorgegebenen Teil desselben mit dem entsprechenden Teil des Identifiers der empfangenen Message übereinstimmt. Weil darüber hinaus die im Message Object MO12 enthaltene Prioritäts-Information eine höhere Prioritätsstufe repräsentiert als die Prioritäts-Information des Message Objects M10, welches derzeit als das Message Object registriert ist, in welchem die empfangenen Daten zu speichern sind, registriert der CAN-Controller, daß das Message Object MO12 beim aktuellen Stand der Dinge das Message Object ist, in welchem die empfangenen Daten zu speichern sind.

Bei der Überprüfung des nächsten Message Objects MO13 stellt der CAN-Controller fest, daß dieses Message Object nicht das Message Object sein kann, in welchem die empfangenen Daten zu speichern sind, weil, wie vorstehend bereits erwähnt wurde, Message Objects mit der Prioritäts-Information 11 in arbitration windows unberücksichtigt bleiben. Der CAN-Controller registriert daher auch weiterhin, daß das Message Object MO12 beim aktuellen Stand der Dinge das Message Object ist, in welchem die empfangenen Daten zu speichern sind.

Bei der Überprüfung des nächsten Message Objects MO14 stellt der CAN-Controller fest, daß dieses Message Object nicht das Message Object sein kann, in welchem die empfangenen Daten zu speichern sind, weil die darin enthaltene Prioritäts-Information keine höhere Prioritätsstufe repräsentiert als die Prioritäts-Information des Message Objects MO12, welches derzeit als das Message Object registriert ist, in welchem die empfangenen Daten zu speichern sind. Der CAN-Controller registriert daher auch weiterhin, daß das Message Object MO12 beim aktuellen Stand der Dinge das Message Object ist, in welchem die empfangenen Daten zu speichern sind.

Der CAN-Controller hat also ermittelt, daß das Message Object MO7 das Message Object ist, in welchem die als nächste zu versendenden Daten gespeichert sind, und daß das Message Object MO12 das Message Object ist, in welches die empfangenen Daten zu schreiben sind.

Der CAN-Controller schreibt sodann die empfangenen Daten in das Message Object MO12, und versendet die im Message Object MO7 gespeicherten Daten.

Danach durchsucht der CAN-Controller die vorhandenen Message Objects erneut, um zu ermitteln, in welchem Message Object die als nächste zu versendenden Daten gespeichert sind, und/oder um zu ermitteln, in welches Message Object zwischenzeitlich empfangene Daten zu schreiben sind.

Wie unter Berücksichtigung der vorstehenden Ausführungen unschwer nachvollziehbar ist, kann durch das Einfügen der Prioritäts-Information in die Message Objects auf sehr flexible Art und Weise Einfluß auf die Auswahl der Message Objects durch den CAN-Controller genommen werden. Dies gilt sowohl für Message Objects, deren Inhalt zu versenden ist, als auch für Message Objects, in welchen empfangene Daten zu speichern sind.

Da die Prioritäts-Information nur jeweils ein oder einige wenige Bits umfaßt, und da es zudem möglich ist, die Prioritäts-Information von nur einer einzelnen oder bestimmten mehreren Message Objects zu verändern, kann jederzeit, insbesondere auch während des normalen Betriebs des CAN, Einfluß auf die Auswahl des zu verwendenden Message Objects genommen werden.

### Bezugszeichenliste

- AF: Akzeptanzmasken-Feld
- BUS: Bus
- CIF: Steuerinformations-Feld
- DF: Daten-Feld
- IF: Identifier-Feld
- Kx: Knoten
- PI: Prioritäts-Information

## Patentansprüche

1. An einen Bus angeschlossene Einrichtung, die über den Bus Daten zu einer oder mehreren anderen Einrichtungen versenden kann und/oder Daten von anderen Einrichtungen empfangen kann,
- wobei die Einrichtung Speicher oder Speicherbereiche enthält, in welchen zu versendende oder empfangene Daten zwischengespeichert werden, und
- wobei die Einrichtung eine Steuereinrichtung enthält, die ermittelt,
- ob Daten zu versenden sind und gegebenenfalls in welchem Speicher oder Speicherbereich die als nächste zu versendenden Daten gespeichert sind, und/oder
- in welchen Speicher oder Speicherbereich die empfangenen Daten zu speichern sind,
**dadurch gekennzeichnet,**
**daß** in jedem Speicher oder Speicherbereich eine in den über den Bus übertragenen Daten nicht enthaltene Information gespeichert ist, durch welche dem jeweiligen Speicher oder Speicherbereich eine Prioritätsstufe zugeordnet wird, und daß die Steuereinrichtung unter Berücksichtigung dieser Information entscheidet, in welchem Speicher oder Speicherbereich die als nächste zu versendenden Daten gespeichert sind und/oder in welchen Speicher oder Speicherbereiche die empfangenen Daten zu speichern sind.

2. Einrichtung nach Anspruch 1,
**dadurch gekennzeichnet,**
**daß** die Steuereinrichtung bei der Ermittlung des Speichers oder Speicherbereiches, in welchem die als nächste zu versendenden Daten gespeichert sind, und/oder bei der Ermittlung des Speichers oder Speicherbereiches, in welchem die empfangenen Daten zu speichern sind, alle vorhandenen Speicher oder Speicherbereiche durchsucht.

3. Einrichtung nach Anspruch 2,
**dadurch gekennzeichnet,**
**daß** die Steuereinrichtung beim Durchsuchen der vorhandenen Speicher oder Speicherbereiche gleichzeitig ermittelt, in welchem Speicher oder Speicherbereich die als nächste zu versendenden Daten gespeichert sind, und in welchem Speicher oder Speicherbereich empfangene Daten zu speichern sind.

4. Einrichtung nach einem der vorhergehenden Ansprüche,
**dadurch gekennzeichnet,**
**daß** die Steuereinrichtung die Speicher oder Speicherbereiche in einer vorgegebenen Reihenfolge durchsucht.

5. Einrichtung nach Anspruch 4,
**dadurch gekennzeichnet,**
**daß** die Reihenfolge durch eine in der Einrichtung vorhandene Liste vorgegeben wird.

6. Einrichtung nach Anspruch 4,
**dadurch gekennzeichnet,**
**daß** die Reihenfolge durch in den Speichern oder Speicherbereichen gespeicherte Pointer vorgegeben wird, die auf den in der Reihenfolge vor dem betreffenden Speicher oder Speicherbereich stehenden Speicher oder Speicherbereich zeigen und/oder auf den in der Reihefolge nach dem betreffenden Speicher oder Speicherbereich stehenden Speicher oder Speicherbereich zeigen.

7. Einrichtung nach einem der vorhergehenden Ansprüche,
**dadurch gekennzeichnet,**
**daß** die Steuereinrichtung bei der Ermittlung des Speichers oder Speicherbereiches, in welchem die als nächste zu versendenden Daten gespeichert sind, und/oder bei der Ermittlung des Speichers oder Speicherbereiches, in welchem die empfangenen Daten zu speichern sind, nur diejenigen Speicher oder Speicherbereiche berücksichtigt, die unter den durchsuchten Speichern oder Speicherbereichen die die höchste gefundene Prioritätsstufe repräsentierende Prioritäts-Information enthalten.

8. Einrichtung nach Anspruch 7,
**dadurch gekennzeichnet,**
**daß** die Steuereinrichtung aus den zu berücksichtigenden Speichern oder Speicherbereichen denjenigen Speicher oder Speicherbereich als den zu ermittelnden Speicher oder Speicherbereich auswählt, der von den zu berücksichtigenden Speichern oder Speicherbereichen beim Durchsuchen der vorhandenen Speicher oder Speicherbereiche als erster gefunden wurde.

9. Einrichtung nach Anspruch 7,
**dadurch gekennzeichnet,**
**daß** die Steuereinrichtung aus den zu berücksichtigenden Speichern oder Speicherbereichen denjenigen Speicher oder Speicherbereich als den zu ermittelnden Speicher oder Speicherbereich auswählt, dessen Inhalt die besten Chancen hat, die Arbitrierung zu gewinnen, die durchgeführt wird, wenn mehrere am Bus angeschlossene Einrichtungen gleichzeitig Daten auf den Bus ausgeben.

10. Einrichtung nach Anspruch 7,
**dadurch gekennzeichnet,**
**daß** die Steuereinrichtung aus den zu berücksichtigenden Speichern oder Speicherbereichen denjenigen Speicher oder Speicherbereich als den zu ermittelnden Speicher oder Speicherbereich auswählt, der gemäß einer in der Einrichtung vorhandenen Festlegung zum betreffenden Zeitpunkt zu verwenden ist.

11. Einrichtung nach einem der Ansprüche 7 bis 10,
**dadurch gekennzeichnet,**
**daß** die Steuereinrichtung den zu ermittelnden Speicher oder Speicherbereich nach verschiedenen Kriterien aus den zu berücksichtigenden Speichern oder Speicherbereichen auswählen kann, wobei es von der Prioritäts-Information der zu berücksichtigenden Speicher oder Speicherbereiche abhängt, nach welchem Kriterium die Auswahl erfolgt.

12. Einrichtung nach einem der vorhergehenden Ansprüche,
**dadurch gekennzeichnet,**
**daß** die Steuereinrichtung bei der Ermittlung des Speichers oder Speicherbereiches, in welchem die als nächste zu versendenden Daten gespeichert sind, und/oder bei der Ermittlung des Speichers oder Speicherbereiches, in welchem die empfangenen Daten zu speichern sind, unter bestimmten Umständen Speicher oder Speicherbereiche, die eine bestimmte Prioritäts-Information enthalten, unberücksichtigt läßt.

13. Einrichtung nach einem der vorhergehenden Ansprüche,
**dadurch gekennzeichnet,**
**daß** die Einrichtung als Knoten in einem CAN verwendbar ist.

14. Einrichtung nach Anspruch 13,
**dadurch gekennzeichnet,**
**daß** die Steuereinrichtung Speicher oder Speicherbereiche, die eine bestimmte Prioritäts-Information enthalten, unberücksichtigt läßt, wenn die Einrichtung für die Verwendung als Knoten in einem Time Triggered CAN konzipiert ist, aber als Knoten in einem normalen CAN verwendet wird.

15. Einrichtung nach Anspruch 13 oder 14,
**dadurch gekennzeichnet,**
**daß** die Steuereinrichtung Speicher oder Speicherbereiche, die eine bestimmte Prioritäts-Information enthalten, unberücksichtigt läßt, wenn die Einrichtung als Knoten in einem Time Triggered CAN verwendet wird, und sich das Time Triggered CAN gerade in einem arbitration window befindet.

16. Einrichtung nach Anspruch 13 oder 14,
**dadurch gekennzeichnet,**
**daß** die Steuereinrichtung Speicher oder Speicherbereiche, die eine bestimmte Prioritäts-Information enthalten, unberücksichtigt läßt, wenn die Einrichtung als Knoten in einem Time Triggered CAN verwendet wird, und sich das Time Triggered CAN gerade in einem arbitration window befindet.

17. Einrichtung nach Anspruch 15 oder 16,
**dadurch gekennzeichnet,**
**daß** die Speicher oder Speicherbereiche, die unberücksichtigt bleiben, wenn sich das Time Triggered CAN gerade in einem arbitration window befindet, und die Speicher oder Speicherbereiche, die unberücksichtigt bleiben, wenn sich das Time Triggered CAN gerade in einem exclusive window befindet, unterschiedliche Speicher oder Speicherbereiche sind.

18. Einrichtung nach einem der Ansprüche 13 bis 17,
**dadurch gekennzeichnet,**
**daß** die Speicher oder Speicherbereiche Message Objects sind.

## Claims

1. Device which is connected to a bus, can transmit data to one or more other devices, and/or which can receive data from other devices, via the bus,
- with the device containing memories or memory areas in which data to be transmitted or received is temporarily stored, and
- with the device containing a control device which determines
- whether any data is to be transmitted and, if appropriate, in which memory or memory area the data which is to be transmitted next is stored, and/or
- in which memory or memory area the received data is to be stored,
**characterized in that**
information which is not contained in the data transmitted via the bus is stored in each memory or memory area, and is used to allocate a priority level to the respective memory or memory area, and wherein the control device takes this information into account in order to decide the memory or memory area in which the next data to be transmitted will be stored and/or the memory or memory areas in which the received data is to be stored.

2. Device according to Claim 1,
**characterized in that**,
when determining the memory or memory area in which the next data to be transmitted will be stored, and/or when determining the memory or memory area in which the received data is to be stored, the control device searches all the available memories or memory areas.

3. Device as claimed in Claim 2,
**characterized in that**,
while searching through the available memories or memory areas, the control device at the same time determines the memory or memory area in which the next data to be transmitted will be stored, and the memory or memory area in which received data is to be stored.

4. Device as claimed in one of the preceding claims,
**characterized in that**
the control device searches the memories or memory areas in a predetermined sequence.

5. Device as claimed in Claim 4,
**characterized in that**
the sequence is predetermined by means of a list in the device.

6. Device as claimed in Claim 4,
**characterized in that**
the sequence is predetermined by means of pointers which are stored in the memories or memory areas, point to the memory or memory area which is before the relevant memory or memory area in the sequence, and/or point to the memory or memory area which is after the relevant memory or memory area in the sequence.

7. Device as claimed in one of the preceding claims,
**characterized in that**,
when determining the memory or memory area in which the next data to be transmitted will be stored, and/or when determining the memory or memory area in which the received data is to be stored, the control device takes into account only those memories or memory areas which, of the searched memories or memory areas, contain the priority information which represents the highest priority level found.

8. Device as claimed in Claim 7,
**characterized in that**
the control device chooses from the memories or memory areas to be taken into account that memory or memory area as the memory or memory area to be determined which was the first to be found of the memories or memory areas to be taken into account when searching the available memories or memory areas.

9. Device as claimed in Claim 7,
**characterized in that**
the control device chooses from the memories or memory areas to be taken into account as the memory or memory area to be determined that memory or memory area whose contents have the best chance of winning the arbitration process which is carried out when two or more devices which are connected to the bus emit data to the bus at the same time.

10. Device as claimed in Claim 7,
**characterized in that**
the control device chooses from the memories or memory areas to be taken into account as the memory or memory area to be determined that memory or memory area which is to be used at the relevant time on the basis of a stipulation in the device.

11. Device as claimed in one of Claims 7 to 10,
**characterized in that**
the control device can select the memory or memory area to be determined on the basis of various criteria from the memories or memory areas to be taken into account, with the criterion on which the selection is being based depending on the priority information of the memories or memory areas to be taken into account.

12. Device as claimed in one of the preceding claims,
**characterized in that**,
when determining the memory or memory area in which the data to be transmitted next will be stored and/or when determining the memory or memory area in which the received data is to be stored, the control device in some circumstances ignores memories or memory areas which contain specific priority information.

13. Device as claimed in one of the preceding claims,
**characterized in that**
the device can be used as a node in a CAN.

14. Device as claimed in Claim 13,
**characterized in that**
the control device ignores memories or memory areas which contain specific priority information, if the device is designed for use as a node in a time-triggered CAN but is being used as a node in a normal CAN.

15. Device as claimed in Claim 13 or 14,
**characterized in that**
the control device ignores memories or memory areas which contain specific priority information when the device is being used as a node in a time-triggered CAN and the time-triggered CAN is currently in an arbitration window.

16. Device as claimed in Claim 13 or 14,
**characterized in that**
the control device ignores memories or memory areas which contain specific priority information when the device is being used as a node in a time-triggered CAN and the time-triggered CAN is currently in an arbitration window.

17. Device as claimed in Claim 15 or 16,
**characterized in that**
the memories or memory areas which are ignored when the time-triggered CAN is currently in an arbitration window, and the memories or memory areas which are ignored when the time-triggered CAN is currently in an exclusive window, are different memories or memory areas.

18. Device as claimed in one of Claims 13 to 17,
**characterized in that**
the memories or memory areas are message objects.

## Revendications

1. Dispositif raccordé à un bus et qui peut envoyer par l'intermédiaire du bus vers un ou plusieurs autres dispositifs et/ou recevoir par l'intermédiaire du bus des données d'autres dispositifs,
- le dispositif contenant des mémoires ou des zones de mémoire dans lesquelles les données à émettre ou à recevoir sont conservées temporairement,
- le dispositif contenant un dispositif de commande qui détermine
- si des données doivent être envoyées et éventuellement dans quelles mémoires ou zones de mémoire les données à envoyer en premier sont conservées et/ou
- dans quelles mémoires ou zones de mémoire les données reçues doivent être conservées,
**caractérisé en ce que**
dans chaque mémoire ou zone de mémoire est conservée une information non contenue dans les données transmises par l'intermédiaire du bus et par laquelle la mémoire ou zone de mémoire concernée reçoit un niveau de priorité, et **en ce qu'**en tenant compte de cette information, le dispositif de commande décide quelle mémoire ou zone de mémoire contient en mémoire les données à envoyer en premier et/ou dans quelle mémoire ou zone de mémoire les données reçues doivent être conservées.

2. Dispositif selon la revendication 1, **caractérisé en ce que** lorsqu'il détermine quelle mémoire ou zone de mémoire contient les données à envoyer en premier et/ou lorsqu'il détermine dans quelle mémoire ou zone de mémoire les données reçues doivent être conservées, le dispositif de commande examine toutes les mémoires ou zones de mémoire présentes.

3. Dispositif selon la revendication 2, **caractérisé en ce que** lorsqu'il examine les mémoires ou zones de mémoire, le dispositif de commande détermine en même temps quelle mémoire ou zone de mémoire contient les données à envoyer en premier et dans quelle mémoire ou zone de mémoire les données reçues doivent être conservées.

4. Dispositif selon l'une des revendications précédentes, **caractérisé en ce que** le dispositif de commande examine les mémoires ou zones de mémoire dans une succession prédéterminée.

5. Dispositif selon la revendication 4, **caractérisé en ce que** la succession est prédéterminée par une liste présente dans le dispositif.

6. Dispositif selon la revendication 4, **caractérisé en ce que** la succession est prédéterminée par des pointeurs conservés dans les mémoires ou zones de mémoire et qui indiquent la mémoire ou zone de mémoire située en amont de la mémoire ou de la zone de mémoire concernée dans la succession et/ou sur la mémoire ou zone de mémoire située en aval de la mémoire ou zone de mémoire concernée dans la succession;

7. Dispositif selon l'une des revendications précédentes, **caractérisé en ce que** lorsqu'il détermine la mémoire ou la zone de mémoire qui contient les données à envoyer en premier et/ou lorsqu'il détermine la mémoire ou la zone de mémoire dans laquelle les données reçues doivent être conservées, le dispositif de commande ne tient compte que des mémoires ou zones de mémoire qui, parmi les mémoires ou zones de mémoire contiennent l'information de priorité qui représente le plus haut niveau de priorité découvert.

8. Dispositif selon la revendication 7, **caractérisé en ce que** parmi les mémoires ou zones de mémoire qui doivent être prises en compte, le dispositif de commande sélectionne comme mémoire ou zone de mémoire à déterminer la mémoire ou zone de mémoire qui a été découverte en premier parmi les mémoires ou zones de mémoire à prendre en compte lors de l'examen des mémoires ou zones de mémoire présentes.

9. Dispositif selon la revendication 7, **caractérisé en ce que** parmi les mémoires ou zones de mémoire à prendre en compte, le dispositif de commande sélectionne comme mémoire ou zone de mémoire à déterminer la mémoire ou zone de mémoire dont le contenu a les meilleures chances de gagner l'arbitrage qui est réalisé lorsque plusieurs dispositifs raccordés au bus délivrent simultanément des données sur le bus.

10. Dispositif selon la revendication 7, **caractérisé en ce que** parmi les mémoires ou zones de mémoire à prendre en compte, le dispositif de commande sélectionne comme mémoire ou zone de mémoire à déterminer la mémoire ou zone de mémoire qui doit être utilisée à l'instant concerné selon une règle définie dans le dispositif.

11. Dispositif selon l'une des revendications 7 à 10, **caractérisé en ce que** le dispositif de commande peut sélectionner la mémoire ou zone de mémoire à déterminer en fonction de différents critères parmi les mémoires ou zones de mémoire à prendre en compte, l'information de priorité des mémoires ou zones de mémoire à prendre en compte indiquant selon quel critère la sélection s'effectue.

12. Dispositif selon l'une des revendications précédentes, **caractérisé en ce que** lors de la détermination de la mémoire ou de la zone de mémoire qui contient les données à envoyer en premier et/ou lors de la détermination de la mémoire ou de la zone de mémoire dans laquelle les données reçues doivent être conservées, le dispositif de commande ne tient pas compte dans certaines circonstances des mémoires ou zones de mémoire qui contiennent un information de priorité définie.

13. Dispositif selon l'une des revendications précédentes, **caractérisé en ce que** le dispositif peut être utilisé pour les noeuds d'un CAN.

14. Dispositif selon la revendication 13, **caractérisé en ce que** le dispositif de commande ne tient pas compte des mémoires ou zones de mémoire qui contiennent une information de priorité définie lorsque le dispositif est conçu pour être utilisé comme noeud dans un CAN à activation temporelle mais est utilisé comme noeud dans un CAN normal.

15. Dispositif selon les revendications 13 ou 14, **caractérisé en ce que** le dispositif de mémoire ne tient pas compte des mémoires ou zones de mémoire qui contiennent une information de priorité définie lorsque le dispositif est utilisé comme noeud dans un CAN à activation temporelle et que le CAN à activation temporelle se trouve dans une fenêtre d'arbitrage.

16. Dispositif selon les revendications 13 ou 14, **caractérisé en ce que** le dispositif de commande ne tient pas compte de mémoires ou de zones de mémoire qui contiennent une information de priorité définie lorsque le dispositif est utilisé comme noeud dans un CAN à activation temporelle et que le CAN à activation temporelle se trouve dans une fenêtre d'arbitrage.

17. Dispositif selon les revendications 15 ou 16, **caractérisé en ce que** les mémoires ou zones de mémoire qui ne sont pas prises en compte lorsque le CAN à activation temporelle se trouve dans une fenêtre d'arbitrage et les mémoires ou zones de mémoire qui ne sont pas prises en compte lorsque le CAN à activation temporelle se trouve dans une fenêtre d'exclusion sont des mémoires ou zones de mémoire différentes.

18. Dispositif selon l'une des revendications 13 à 17, **caractérisé en ce que** les mémoires ou zones de mémoire sont des objets de message.
